# EUROPEAN PATENT SPECIFICATION

(11) **EP 0 664 177 B1**
(45) Date of publication and mention of the grant of the patent: **29.12.1997**
(21) Application number: 94919870.9
(22) Date of filing: 07.07.1994
(51) Int. Cl.: B23H 7/02, B23H 7/10

(54) **METHOD OF AND APPARATUS FOR DETECTING POSITIONS WHERE WIRE FAILURE OCCURS IN WIRE ELECTRICAL DISCHARGE MACHINE**
VERFAHREN UND VORRICHTUNG ZUM FESTSTELLEN DER DRAHTBRUCHSTELLE IN EINER DRAHTSCHNEIDEFUNKENEROSIONSMASCHINE
PROCEDE ET DISPOSITIF DE DETECTION DE POSITIONS DE DEFAILLANCE SUR UN FIL DANS UNE MACHINE ELECTRIQUE DE PRODUCTION DE FIL

(30) Priority: 13.07.1993 JP 195244/93
(43) Date of publication of application: 26.07.1995
(73) Proprietor: FANUC LTD., Minamitsuru-gun, Yamanashi 401-05 (JP)
(72) Inventor: KAJITORI, Toyotada, Fanuc Dai-3 Vira-karamatsu, Minamitsuru-gun,Yamanashi 401-05 (JP); TAKEYAMA, Naotake, Fanuc Dai-3 Vira-karamatsu, Minamitsuru-gun, Yamanashi 401-05 (JP)
(74) Representative: Billington, Lawrence Emlyn
(86) International application number: JP9401111
(87) International publication number: WO9502481

(56) References cited:
- EP-A- 0 366 812
- EP-A- 0 390 933
- JP-A- 1 274 926
- JP-A- 2 076 629
- JP-A- 2 160 422
- JP-A- 2 279 223
- JP-A- 5 200 628
- JP-A-62 063 019

## Description

This invention relates to a method and an apparatus for detecting the location or section of wire passage where a stall of wire (or wire connection trouble) has occurred during a wire feeding operation in a wire cut electric discharge machine, and also to a method and an apparatus for detecting the location of wire trouble including the location of wire breakage when the wire is broken or disconnected.

In the case of a wire cut electric discharge machine, a wire electrode (hereinafter referred to simply as "wire") needs to be fed when a break of wire has occurred while electric discharge machining is in progress, or when discharge processing has to be executed along another machining line. For performing wire feeding, a wire is fed or pushed forward along a predetermined wire path until the tip of the wire reaches a take-up section passing through various sections of the wire cut electric discharge machine. However, the wire path includes narrow passages, such as those of upper and lower guides and a lower arm pipe, and corners formed by direction-turning rollers, by which the tip of wire may stall, ending up with incomplete feed of the wire. Particularly, when the sludge resulting from the electric discharge machining has accumulated around the inlet of such narrow passages, there is a high possibility of a wire feed trouble.

Conventionally, even when such wire feed trouble occurs, as was detected by detecting buckling of the wire electrode in accordance with JP-A-2-160422, there was no way of knowing its location and no technology for systematically and periodically recording the information concerning the locations of wire feed troubles, and this has been one of the bottlenecks to efficient maintenance of wire cut electric discharge machines.

The break of wire is one of typical troubles occurring along a wire path. However, there has been no technology that not only enables us to detect the location of wire break before feeding new wire, such location being provided by EP-A-366812, but also enables us to obtain and record the information concerning the location of wire break together with the information concerning the location of wire feed trouble, and this has been inconvenient for operators.

One example of the present invention may provide a method and an apparatus for detecting a wire trouble location which enables us to quantitatively detect the location of wire feeding trouble in a wire path, and to store and accumulate the information concerning such wire feeding trouble locations obtained based on the results of detections, thereby contributing to the rationalization of maintenance and control, as well as to the analysis of the causes and prevention of wire feeding trouble. Another example of the present invention may provide a method and an apparatus for detecting a wire trouble location also capable of detecting and recording wire break locations, in addition to the above-described wire feeding trouble locations, thereby providing more useful information concerning wire trouble locations.

A first aspect of the present invention provides a wire trouble location detecting method comprising steps of: detecting a wire feed amount when a wire is fed forward along a wire path by a wire feeding means, the wire feed amount being detected as information relating to a distance which a leading edge of the wire has advanced from a wire feed reference position determined on the wire path; monitoring whether the wire is deflected by being prevented from advancing further when the leading edge of the wire gets stuck; and identifying a wire feeding trouble location, based on the wire feed amount detected when the deflection of the wire is detected.

The previously described wire feeding trouble location is identified in relation with one of a plurality of sections provided along the wire path. Moreover, each occurrence of wire feeding troubles is accumulatively stored into a storing region in a storing means, the storing region corresponding to the designated section.

A second aspect of the present invention provides a wire trouble location detecting method comprising steps of: detecting a travel distance of a wire from the time a winding operation of the wire is started to the time the broken end of the wire passes a winding completion position determined on a wire path, in winding up the wire along the wire path by rotating a supply reel in response to interruption of wire feeding operation due to break of the wire, and identifying a wire break trouble location as a point to be reached by advancing the detected wire travel distance from the winding completion position in a wire feeding direction along the wire path.

The wire break location is identified with respect to one of a plurality of sections provided along the wire path. Moreover, each occurrence of wire break trouble is accumulatively stored into a storing region in a storing means, the storing region corresponding to the designated section.

A third aspect of the present invention provides a wire trouble location detecting apparatus for a wire cut electric discharge machine, the apparatus comprising: feed-start-position passage detecting means for detecting whether a leading edge of a wire, fed forward along a wire path, has passed a wire-feed-start position predetermined on the wire path; a wire travel amount detecting means designed to be reset in response to the detection signal from the feed start position passage detecting means and outputs the information concerning the travel amount of the wire after being reset: a wire deflection detecting means for detecting whether the wire is deflected by being prevented from advancing further along the wire path when the leading edge of the wire gets stuck; and
a wire feeding trouble location identifying means for receiving an output of the wire travel amount detecting means in response to an output signal of the wire deflection detecting means, and identifying a wire feeding trouble location on the basis of the detected output value.

The wire feeding trouble location identifying means identifies the output of the wire travel amount detecting means with respect to one of a plurality of sections provided along the wire path. Furthermore, there is provided a storing means for accumulatively storing each occurrence of wire feeding trouble into a wire feeding trouble storing region thereof, the wire feeding trouble storing region corresponding to the designated section.

A fourth aspect of the present invention provides a wire trouble location detecting apparatus for a wire cut electric discharge machine, the apparatus comprising: a winding means for winding a wire along a wire path in response to interruption of a wire feed operation due to break of the wire; a wire winding amount detecting means for detecting information relating to a travel distance of the wire from the time the winding means starts a winding operation of the wire to the time broken end of the wire passes a winding completion position determined on the wire path; and a wire break location identifying means for converting an output of the wire winding amount detecting means into a corresponding distance, and determining a wire break trouble location as a point corresponding to a point to be reached by advancing the distance obtained by the conversion from the winding completion position in a wire feeding direction along the wire path.

The wire break location identifying means converts the output of the wire winding amount detecting means into the corresponding distance, and identifies the distance obtained by the conversion is identified with respect to one of a plurality of sections provided along the wire path. Furthermore, there is provided a storing means for accumulatively storing each occurrence of wire break trouble in a wire break trouble storing region thereof, the wire break trouble storing region corresponding to the designated section.

A development of the fourth aspect of the present invention provides a wire trouble location detecting apparatus for a wire cut electric discharge machine, the apparatus comprising: a wire feed roller driven by a wire feed motor in both forward and backward directions, for feeding a wire forward along a wire path or winding the wire backward in the event of break of wire; a feed-start-position passage detecting means provided on start point side of the wire path for detecting whether a leading end of the wire has passed a predetermined wire-feed-start position on the wire path; a wire feeding trouble detecting means; a wire break detecting means; an encoder for detecting a rotational amount of the wire feed motor; a wire feeding trouble location retrieving means for stopping the wire feed motor in response to wire feeding trouble detected by the wire feeding trouble detecting means and for reading out an output of the encoder; a means for stopping wire feed motor in response to a break of wire detected by the wire break detecting means and resetting the encoder; a means for sending a reset signal to the encoder as soon as the feed-start-position passage detecting means detects that the leading end of the wire has passed the wire-feed-start position in a wire feeding operation; a wire break location retrieving means for reading out an output of the encoder as soon as the feed-start-position passage detecting means detects that the broken end of the wire has passed the wire-feed-start position when the broken wire is wound by the wire feed roller driven in the backward direction; a conversion-to-distance means for converting the outputs obtained from the wire feeding trouble location retrieving means and the wire break location retrieving means into distance values; and a wire trouble location identifying means for identifying a wire feeding trouble location or a wire break location on the basis of the wire-feed-start position and the distance values obtained by the conversion-into-distance means.

As explained above, the first and third aspects of the present invention enable us to quantitatively detect a wire feeding trouble location in the event that the wire tip gets stuck in a wire feeding operation, and to accurately obtain information relating to wire trouble locations based on thus detected data. Particularly, if adequate sections are provided along a wire path, it becomes possible to continuously monitor the occurrence of wire feeding troubles with respect to individual sections. Thus, very useful information will be obtained for maintenance and control of the wire cut electric discharge machine and for analyzing the causes and preventing wire feeding trouble.

Furthermore, the second and fourth aspects of the present invention provide systems for detecting and recording wire break troubles also as a form of wire troubles, whereby it becomes possible to obtain the information relating to wire trouble locations for both the wire break troubles and wire feeding troubles. With these systems it becomes possible to rationalize the maintenance and control of the wire cut electric discharge machine, as well as to analyze the causes of and prevent the occurrences of both the wire feeding troubles and wire break troubles.

### BRIEF DESCRIPTION OF DRAWINGS

Fig. 1 is a cross-sectional view schematically showing an arrangement of a main part of a wire cut electric discharge machine, wherein the wire trouble location is detected using the wire trouble location detecting method and apparatus in accordance with an embodiment of the present invention;
Fig. 2 is a top view schematically showing an arrangement of a first cutting electrode 13 used in the embodiment apparatus of Fig. 1;
Fig. 3 is a view showing a simplified appearance of a wire deflection detecting electrode used in the embodiment apparatus of Fig. 1;
Fig. 4 is a cross-sectional view of the upper guide for illustrating the positional relationships among the sections defined with respect to the upper guide of the same embodiment;
Fig. 5 is a block diagram illustrating a wire cut electric discharge system including a wire break location detecting apparatus in accordance with an embodiment of the present invention;
Fig. 6 is a flowchart illustrating a wire break location detecting and recording processing in accordance with an embodiment of the present invention;
Fig. 7 is a view exemplarily illustrating the setting of sections designated for detecting trouble locations along the wire path of the wire cut electric discharge machine shown in Fig. 1;
Fig. 8 is a table for showing a mode of recording a trouble occurrence position in a corresponding section of a register region secured in a data memory and designated in a manner as shown in Fig. 7, in the form of a table; and
Fig. 9 is a flowchart schematically illustrating the procedure for executing the automatic wire feeding operation and the wire feed trouble location detecting and recording operation.

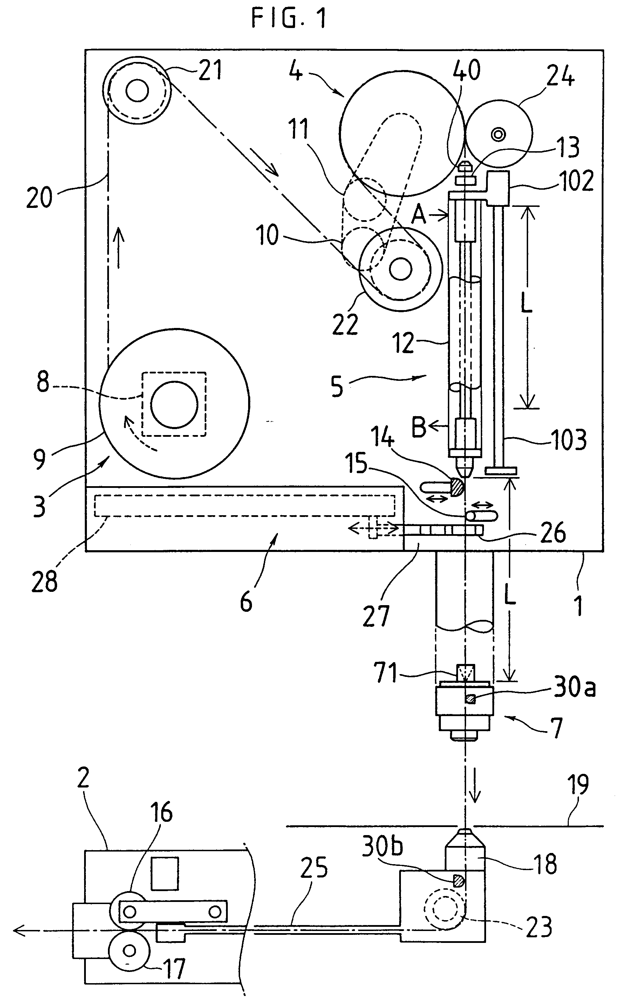

Fig. 1 schematically shows an arrangement of a main part of a wire cut electric discharge machine, wherein the wire trouble location is detected using the wire trouble location detecting method and apparatus in accordance with the present invention.

With reference to Fig. 1, the main part of the wire cut electric discharge machine is roughly divided into two parts confronting with each other, an upper machine frame portion 1 and a lower machine frame portion 2. These two portions 1 and 2 are integrally connected by columns not shown. The upper machine frame portion 1 includes a wire winding unit 3, a wire feed roller 4, a wire cutting mechanism 5, a wire drawing unit 6, and an upper guide 7. A wire deflection detecting electrode 40 is interposed between the wire feed roller 4 and the wire cutting mechanism 5.

The wire winding unit 3 includes a supply reel 9 connected to a winding motor 8, and the wire feed roller 4 is driven by a wire feed motor 10 rotatable in both forward and backward directions. A reference numeral 11 represents an encoder installed to control the feeding of wire by detecting a rotational amount of the wire feed motor 10. As described later, this encoder 11 is used for measuring a movement amount of wire in detecting a wire feed trouble location and a wire break location.

The wire cutting mechanism 5 comprises a wire feed pipe arrangement 12 disposed above the upper nozzle 7, first and second wire cutting electrodes 13 and 14 disposed at an inlet and an outlet of the pipe arrangement 12, respectively, and a pressure roller 15.

The second wire cutting electrode 14, as described later, is used as a wire passage detecting electrode in detecting the wire break location and also as a wire tip detecting electrode used in the wire feeding operation. This electrode 14 and the pressure roller 15 are made capable of leaving and approaching the wire path. More specifically, as illustrated in the drawing, the electrode 14 and the pressure roller 15, in response to electric power supply control to a solenoid (not shown), are moved toward the path of wire 20 in a slot when the electrode 14 is used as a wire passage detecting electrode for the wire cutting operation or wire break location detecting electrode, or as a wire tip detecting electrode for wire feeding operation. After finishing the wire cutting operation, however, the electrode 14 and the pressure roller 15 are kept away from the wire 20.

The upper guide 7 includes an upper machining electrode 30a facing to the wire path, so that machining current flows between the upper machining electrode 30a and the lower machining electrode 30b during the discharge operation.

The lower machine frame portion 2 includes a wire take-up roller 16, a pinch roller 17 confronting the wire take-up roller 16, and a lower guide. A reference numeral 19 represents an upper surface of a work table. The lower machining electrode 30b is disposed facing to the wire passage inside the lower guide 18. The wire 20, pulled out from the supply reel 9, is entrained around the direction-turning rollers 21 and 22 and is guided by the wire feed roller 4. And then, the wire 20 passes through the wire deflection detecting electrode 40 and the first wire cutting electrode, and enters into the wire feed pipe arrangement 12, reaching the upper guide 7. Furthermore, the wire 20 extends passing through the lower guide 18 and is bent by the direction-turning roller 23, thereby passing through the wire path reaching the wire take-up roller 16. The wire 20 travels along this path by the aid of feeding function of the wire feed roller 4 driven by the wire feed motor 10 and a traction force of the wire take-up roller 16. The lower machining electrode 30b, disposed inside the lower guide 18, and the upper machining electrode 30a are simultaneously brought into contract with the travelling wire, thereby supplying machining power to the wire.

When the wire 20 is in a normal travelling condition during the discharge operation, the winding motor 8 of the supply reel 9 is left in idling condition. Hence, the winding motor 8 rotates freely in a direction of a dotted arrow. However, in the case of the automatic wire feeding or restoration of wire following the break of wire, the rotational direction of the winding motor 8 is reversed to the direction of the dotted arrow, causing the wire 20 to be tightened between the winding motor 8 and the take-up roller 16 (for automatic wire feeding) or between the winding motor 8 and the wire drawing device 6 (for the repair of wire break). That is, the winding motor 8, the take-up roller 16 and the wire drawing device 6 cooperatively constitute the wire tightening means.

A reference numeral 24 represents a pinch roller, which is pressed against a circumferential surface of the wire feed roller 4 so that the feeding of the wire 20 can be ensured. A reference numeral 25 represents an guiding pipe which is interposed between the direction-turning roller 23 and the wire take-up roller 16 in the lower machine frame portion 2. The wire 20 is passed through this pipe. The wire drawing unit 6 comprises an arm 27 having a clamp portion 26 at the distal end thereof and an air cylinder 28 retracting this arm 27. The front-end clamp portion 26 is positioned downstream of the pressure roller 15. The wire 20 is passed through in this clamp portion 26.

The wire feed pipe arrangement 12 has water inlet and water drain ports at the portions indicated by arrows A and B, although details of these ports are not specifically shown in the drawing. In the event of break of wire, the annealing operation is carried out in the section AB, while the heating region ranging from the position B to the second wire cutting electrode 14 is heated to cut off the wire in this heating region. The whole of wire feed pipe arrangement 12 is electrically insulated from the wire 20.

The wire feed pipe arrangement 12 is supported by a slide member 102 together with the first wire cutting electrode 13 having clamp function. The slide member 102 is raised or lowered by a drive means (not shown) along a column guide 103 within a distance (distance L) ranging from the uppermost position shown in the drawing to a positioning portion 71 formed on the upper guide 7. This mechanism is used in the wire feeding operation. Next, the constructions of the first wire cutting electrode 13 and the wire deflection detecting electrode 40 will be explained schematically.

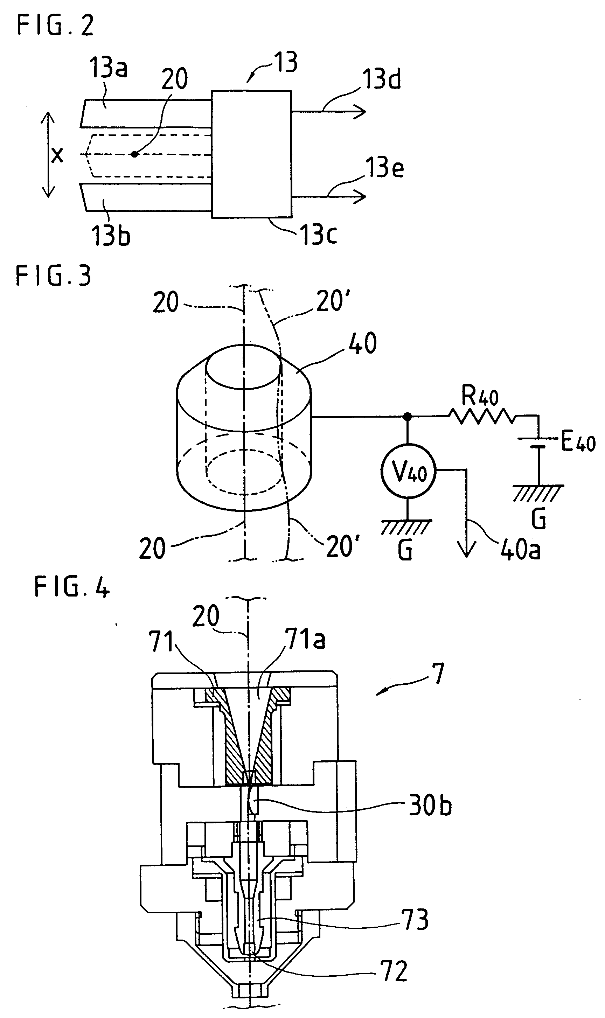

Fig. 2 is a top view of the first wire cutting electrode 13. In the drawing, reference numerals 13a and 13b are a pair of electrode plates supported by an electrode support and drive section 13c, permitting these electrode plates to approach and separate from each other. The electrode support and drive portion 13c includes a solenoid (not shown) for enabling the electrode plates 13a and 13b to take both the opened position indicated by the solid line and closed position indicated by the dotted line. A reference numeral 13e represents a cable for supplying electric power to this solenoid. This cable is connected to a control apparatus of the wire cut electric discharge machine described later. In their opened position, these electrode plates 13a and 13b do not interfere with the wire 20 and are not electrically in contact with the wire 20. On the contrary, in their closed position, these electrode plates 13a and 13b function not only as clamp means for holding the wire 20 but as power terminals for supplying wire cutting power to the clamped wire 20 via a lead 13d.

The first wire cutting electrode 13 is closed only when the wire 20 is cut off or the electrode 13 is lowered together with the wire feed pipe mechanism 12 by the distance L in the wire connecting operation. At other times, these electrode plates 13a and 13b are separated from each other in their opened position. Thus, the wire 20 can pass through and shift freely between these electrode plates.

Fig. 3 is a drawing schematically illustrating a simplified appearance of the wire deflection detecting electrode 40, together with main components of a peripheral circuit of this electrode. The wire deflection detecting electrode 40, having an overall configuration similar to a circular ring or a short pipe, is connected to a wire deflection detecting power source E40 and a voltage detecting element V40. R40 represents a resistor having an appropriate resistance value. When the wire is fed forward in the wire connecting operation, and get stuck somewhere in the wire path, the wire deflection detecting electrode 40 is used to detect such a wire feeding trouble.

That is, the wire 20 passes through the center of the bore of the hollow electrode without contacting the electrode wall as shown in the drawing as long as the wire is sent out smoothly. However, once the wire gets stuck somewhere in the wire path, the wire 20 may deflect as it is forcibly sent out forward continuously by the wire feed roller 4, thus causing the wire 20 to contact the inside wall or a periphery of the wire deflection detecting electrode 40 as indicated by a reference numeral 20'. By maintaining the wire 20 at substantially the earth potential during the wire feeding operation, electric current flows through the wire 20 from the wire deflection detecting power source E40, and a resulting voltage drop can be detected by the voltage detecting element V40. Thus detected signal is sent via a signal line 40a to the later-described control apparatus of the wire cut electric discharge machine. (It will also be possible to provide an independent terminal for applying a wire deflection detecting voltage to the wire during wire feeding and then detect a voltage change in the wire deflection detecting electrode 40 when the wire comes into contact with the wire deflection detecting electrode 40.)

The electrodes 13 and 40 have respective constructions and functions as are described above, and the second wire cutting electrode 14 and the pressure roller 15 are also kept separated from the wire 20 while normal wire cut electric discharge machining is in progress with the wire cut electric discharge machine being driven, so that only the lower machining electrodes 30a and 30b are in contact with the wire 20 during normal wire cut electric discharge machining. Under such a condition, discharge machining current flows between the wire 20 and a workpiece (not shown) on the work table 19, thereby executing the discharge machining operation. Machining fluid, supplied into the upper guide 7 and the lower guide 18, is discharged through nozzles toward the part of workpiece to be machined, thus not only removing sludge settled around the part of workpiece to be machined but also cooling the workpiece. Machining fluid, supplied into the wire feed pipe arrangement 12, is gradually supplied from the position A and is drained from the position B.

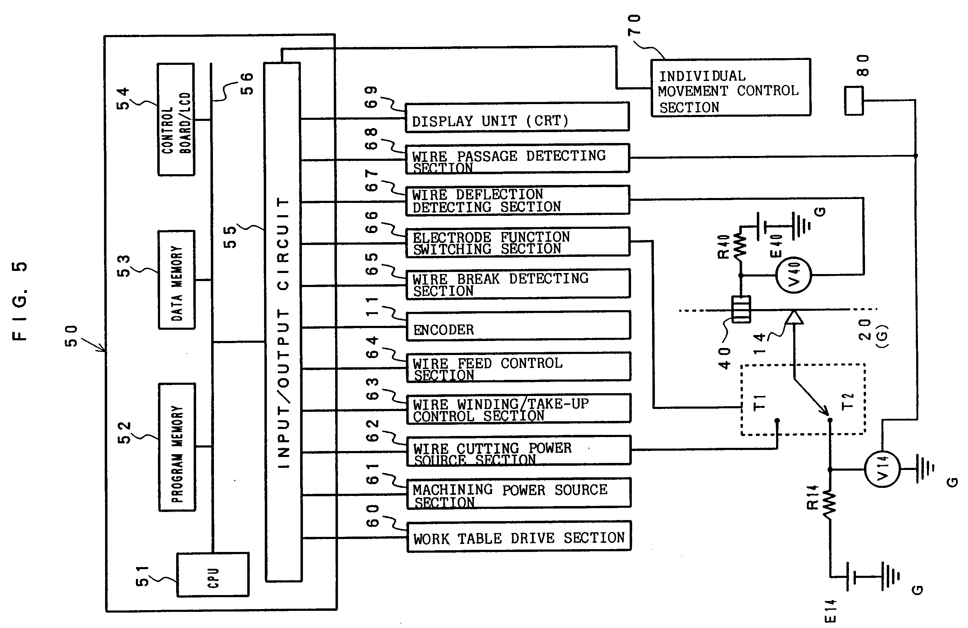

Next, the arrangement of the wire discharge machining system including a wire trouble location detecting apparatus will be explained schematically with reference to Fig. 5.

In Fig. 5, a reference numeral 50 represents the wire cut electric discharge machine control apparatus, which also functions as an NC apparatus for controlling the position of the work table 19. The wire cut electric discharge machine control apparatus 50 includes a central processing unit (hereinafter abbreviated to CPU) 51 consisting of a microprocessor. The CPU 51 is connected via a bus 56 to a program memory 52, a data memory 53, an operation board 54 including a liquid crystal display LCD, and an input/output unit 55.

The program memory 52 stores various programs for controlling various components of the wire cut electric discharge machine and the wire cut electric discharge machine control apparatus itself. The data memory stores position data relating to the machining programs and various setting data for determining other machining conditions, and also functions as a memory temporarily storing data for various computations to be executed by the CPU 51. The data memory 53 further includes, as part of a construction for executing the technical idea of the present invention, register regions for counting the number of output pulses of the encoder 11 and other register regions for storing data of trouble locations in the manner described later.

The input/output unit 55 is connected to a work table drive section 60, a machining power source section 61, a wire cutting power source section 62, a wire winding/take-up control section 83, a wire feed control section 64, a wire break detecting section 65, an electrode function switching section 66, a wire deflection detecting section 67, a wire passage detecting section 68, a display unit (CRT) 69, and control section 70 for controlling other various components of the wire cut electric discharge machine.

The work table drive section 60 and the machining power source section 61, both having well-known constructions, are controlled respectively in accordance with normal methods during the machining operation. The wire cutting power source section 62 supplies electric power to the first and second electrodes 13 and 14 by an amount required for cutting off the wire 20 within the heating region of the wire feed pipe arrangement 12 in the wire feeding operation. The machining wire winding/take-up control section 63 controls the motor (not shown) of the wire take-up roller 16 and the winding motor 8.

The wire feed control section 64 functions as a section for controlling the motor 10 which drives the wire feed roller 4. The rotational amount of this motor is detected by the encoder 11, as described previously. The wire break detecting section 65 serves for detecting a break of wire during machining operation, and is constituted by a conventional mechanism (for example, a system of detecting current flowing through the wire, or a system of detecting a tension of the winding roller).

The electrode function switching section 66 serves for selecting either wire cutting function or wire passage detecting function out of the functions of the electrode 14 by controlling the switching device SW having a contact T1 connected to the wire cutting power source section 62 and another contact T2 connected to wire passage detecting power source E14. The wire passage detecting section 68 serves for detecting a potential of the electrode 14 when the electrode 14 is connected to the contact T2 (i.e. the wire passage detecting power source E14), and is connected to a voltmeter V14 installed as shown in the drawing. R14 is a resistance element having an adequate resistance value, which is provided for making a judgement as to whether or not the electrode 14 is brought into contact with the wire based on the potential of the electrode 14. The power source E14 detects whether or not the electrode 14 is brought into contact with the wire, and the voltage value of this power source E14 may be, for example, several volts.

On the other hand, the wire deflection detecting section 67 is connected to the previously described wire deflection detecting electrode 40 to detect the potential of this electrode 40. The wire deflection detecting section 67 is also connected to the voltmeter V40, previously described with reference to Fig. 3, to judge whether the electrode 40 is brought into contact with the wire based on the potential change of the electrode 40. The voltage supplied to the power source E40 is similar to that for E14, which is in a range of several volts (A single power source may be used instead of E14 and E40).

The display unit 69, which is a display device for displaying wire trouble location information in the form of various patterns, operates in accordance with display programs stored in the program memory 62, thereby displaying, for example, the data representing a wire trouble location as real time warning, or showing a graph representing the total number of wire troubles in each designated section.

The control section 70 is for moving various sections for opening and closing the cutting electrode 13, protruding and retracting the electrode 14, and lowering the pipe arrangement 12 in a wire feeding operation.

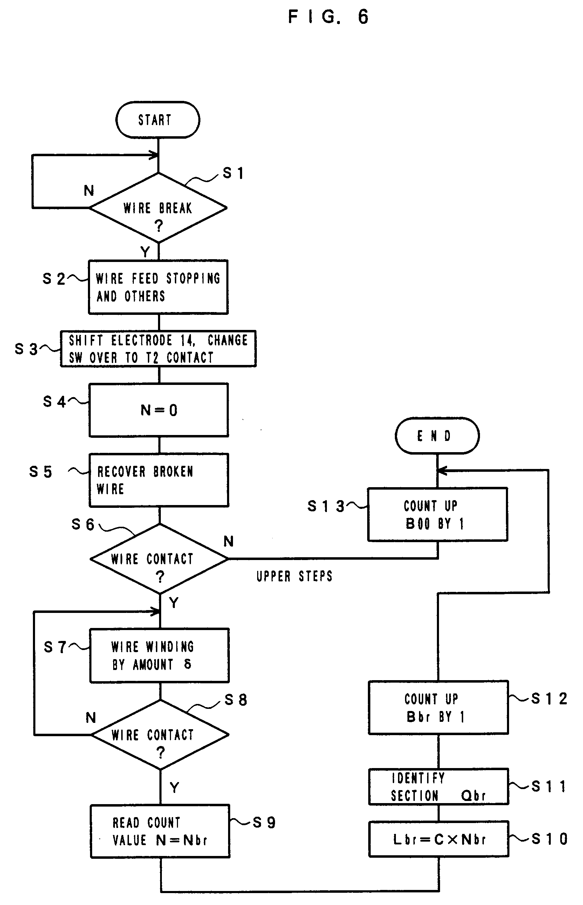

The wire cut electric discharge machine control apparatus 50 stores, in its memory, a program for detecting and storing the wire feeding trouble location and the wire break trouble location, and the program for executing an automatic wire feeding operation. In the normal machining operation, the CPU 51 executes the wire break location detecting and recording operation shown in the flowchart of Fig. 6. In this embodiment, the CPU 51 is also used to execute the NC control of the work table position. Therefore, the wire break location detecting and recording operation is executed as a task processing.

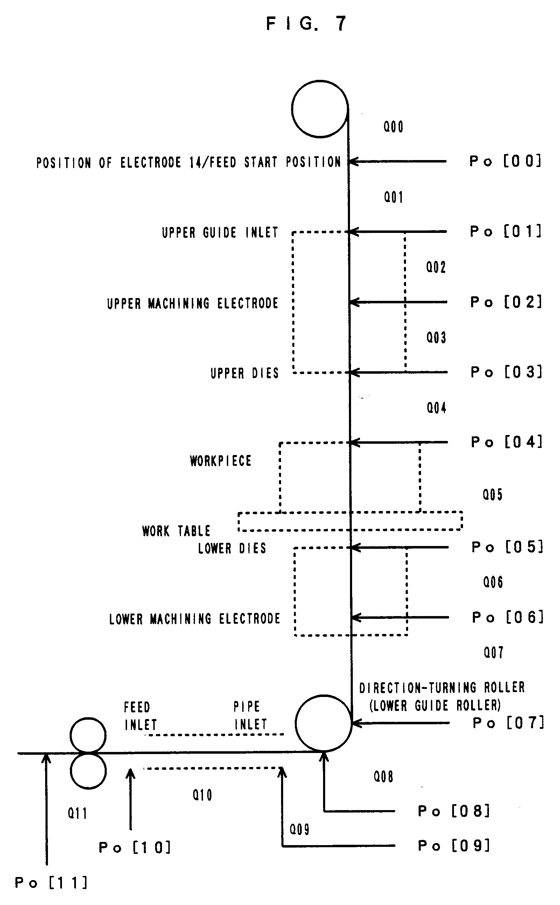

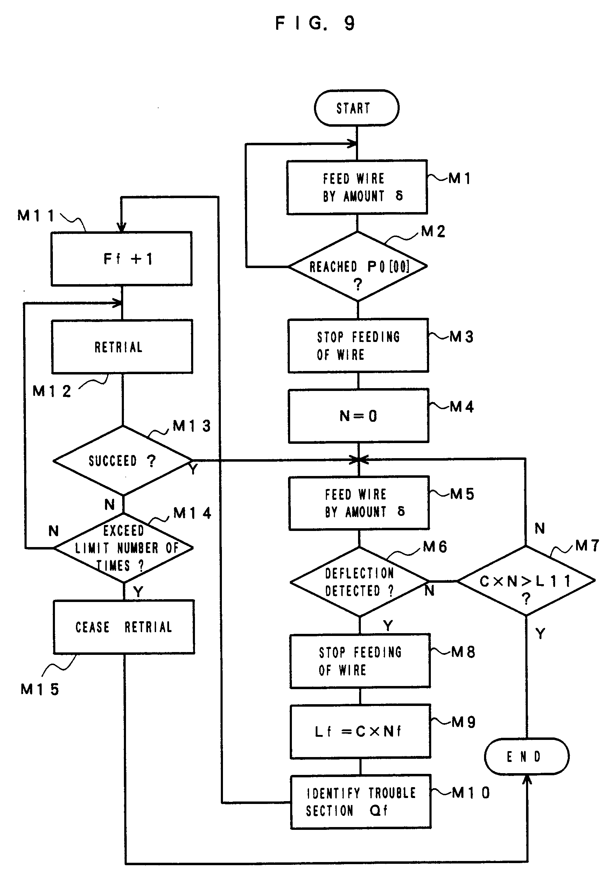

Hereinafter, this task processing will be explained schematically first with reference to Fig. 6; the recording processing of trouble location in each designated section will be explained as well with reference to Figs. 7, 4 and 8; and then the wire feeding trouble location detecting and recording processing in the wire feeding operation, will be explained with reference to the flowchart of Fig. 9.

As soon as the wire cut electric discharge machine starts an ordinary operation, the wire break trouble location detecting and recording operation is started, and the CPU 51 immediately starts sensing a break of wire by periodically sensing whether the break of wire is present or not through the wire break detecting unit 65 (Step S1). If it is detected that break of wire has occurred somewhere in the wire path, a command signal calling for necessary measures such as stopping wire feeding operation, etc., will immediately be issued (Step S2). Almost simultaneously with this, through the control section 70 for moving various sections, the electrode 14 is moved forward from the retracted position separated from the wire 20 to the advance position to come into contact with the wire 20; the electrode function switching section 66 is also operated to cause the contact point of the switching device SW to be connected to T2 (Step S3); and the count of register for counting the position pulse of the encoder 11 is cleared (for N=0)(Step S4).

Next, the take-up roller 16 is rotated to recover a portion of the wire cut off due to the break of wire (Step S5). At this moment, the wire passage detecting section 67 checks whether the wire 20 is in contact with the wire passage detecting electrode 14 (Step S6). That is, if the wire 20 is in contact with the wire passage detecting electrode 14, a small amount of current flows through the resistance element R14 from the wire passage detecting power source E14 to the wire 20 having substantially the earth potential; thus, the electrode 14 is maintained at almost the earth potential; however, if the wire 20 is not in contact with the wire passage detecting electrode 14, the potential of the electrode 14 almost corresponds to that of the wire passage detecting power source E14, and the voltmeter V14 detects such potential changes of the electrode 14.

When non-contact of the wire is detected in step S6, it is judged that the wire break trouble has occurred at a position above the wire passage detecting electrode 14 (on the side of pipe arrangement 12), and the processing proceeds to step S13. In step S13, the count value B00 of the register, whose address is designated for each of sections in the data memory, is increased by 1 (how to divide the wire path into sections will be described later).

When the wire break trouble occurs on the same side as the pipe arrangement 12 with respect to the wire passage detecting electrode 14, the step S6 makes an YES judgement. Thus, the winding-up operation of the wire 20 is started to detect the wire break location more precisely. A method employed in this embodiment is such that the wire 20 is wound up stepwise by a small amount of δ, and each time the winding by the amount of δ is completed, the processing for sensing whether or not the wire 20 has passed through the electrode 14 (contact or non-contact) is repeated (steps S7 and S8).

At the time the passage (i.e. non-contact) of the wire 20 is detected, the wire winding-up operation is stopped, and the count value N=Nbr is read from the register which counts output pulses of the encoder 11 (Step 9). Then, a conversion factor C is multiplied with Nbr to obtain a wire winding-up amount (length or distance) Lbr measured from the time the break trouble occurred, the conversion factor C being obtained beforehand based on the relationship between encoder position pulses and a corresponding path distance (Step S10). Based on the wire winding-up amount Lbr thus obtained, a break trouble section is identified (Step S11). Based on the result of the identification as in the case of processing of step 13, the count value Bbr of the register, whose address is designated by section in the data memory 53, is increased by 1 (step S12).

The task processing of the wire break trouble location detecting and recording operation can be completed by going through the foregoing steps. The sectional recording operation mentioned in the steps S12 and S13 will be explained further with reference to Figs. 7, 4 and 8.

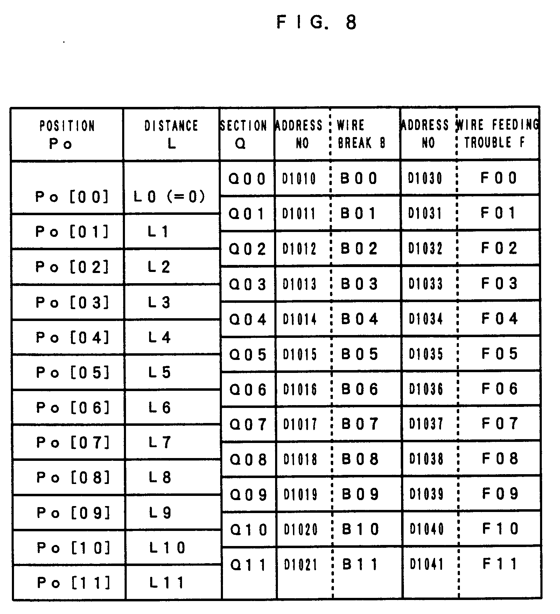

Fig. 7 is a view exemplarily illustrating the sections provided for detecting trouble locations along the wire path of the wire cut electric discharge machine shown in Fig. 1. For explanation, wire path is schematically illustrated Fig. 4 is a cross-sectional view of the upper guide 7 (refer to Fig. 1), which is shown in Fig. 7 for illustrating the sections provided in relation to the upper guide 7. Fig. 8 shows a mode of recording in a corresponding section of the register region secured in the data memory and designated in a manner as shown in Fig. 7, in the form of a table.

First referring to Fig. 7, the wire path of the present embodiment is divided into the following sections Q00-Q11. These sections are commonly used for the detection of wire break trouble locations and the detection of wire feeding trouble locations.
Q00 ; up to Po [00]
Q01 ; Po [00] - Po [01]
Q02 ; Po [01] - Po [02]
Q03 ; Po [02] - Po [03]
Q04 ; Po [03] - Po [04]
Q05 ; Po [04] - Po [05]
Q06 ; Po [05] - Po [06]
Q07 ; Po [06] - Po [07]
Q08 ; Po [07] - Po [08]
Q09 ; Po [08] - Po [09]
Q10 ; Po [09] - Po [10]
Q11 ; Po [10] - Po [11]

More specifically, the respective positions Po[00]-Po[11] are set as follows:
Po [00]; the position corresponding to the electrode 14 (a wire feed start position in the wire feeding operation)
Po [01]; the position corresponding to the inlet of the upper guide 7
Po [02]; the position corresponding to the upper machining electrode 30a
Po [03]; the position corresponding to the upper dies (near the outlet of the upper guide)
Po [04]; the position corresponding to the upper surface of a workpiece
Po [05]; the position corresponding to the lower dies (near the inlet of the lower guide)
Po [06]; the position corresponding to the lower machining electrode 30b
Po [07]; the position corresponding to a turning start point of a wire on the direction-turning roller (a lower guide roller) 23
Po [08]; the position corresponding to the other turning start point of a wire on the direction-turning roller (the lower guide roller) 23
Po [09]; the position corresponding to the inlet of the guiding pipe 25
Po [10]; the position corresponding to a feeding section (i.e. an upstream side of the take-up roller 17)
Po [11]; the position corresponding to the end point of a wire fed (i.e. a downstream side of the take-up roller 17)

Since the positions Po[01]-Po[03] are not clear in Fig. 1, they will be simply explained with reference to Fig. 4. Fig. 4 is an enlarged cross-sectional view of the upper guide 7. In the upper part of the upper guide 7, the positioning portion 71 for determining a stop position of the pipe arrangement 12 which lowers when starting a wire feeding operation is provided so as to form an upper guide inlet 71a (the position Po [01]) of a reversed conical bore. The lower machining electrode 30b (the position Po [02]) is disposed below the inlet 71a, separated by a small distance, facing the path of wire 20. Then, in the vicinity of the outlet of the upper guide 7, there are provided an upper die guide 73 and an upper die 72 continuously (the position Po [03]).

For identifying and recording a section under which the location of wire break trouble comes, what is required is only to compare the above-described result of calculation in step S10 with the previously measured distances from the origin Po [00], the position of electrode 14, to the positions Po[1] to Po [11].

Fig. 8 shows a mode of recording a wire break trouble occurrence position in the corresponding section of register region, determined in that manner, together with wire feeding trouble occurrence position as described later, in the form of a table. For example, the number of times of wire break troubles occurring in a range from around the upper surface of the work W to around the inlet of the lower guide 18 (the position of lower die) is recorded as B05 with the address D1015, which corresponds to section Q05, meaning that the wire break trouble has occurred B05 times within this section.

Next, the detection and recording of the wire feeding trouble locations will be explained. When wire feeding is carried out for resuming the machining operation in the event of the wire break trouble, the above-explained break trouble detection and recording operation is first completed and then a predetermined wire break postprocessing is executed and thereafter wire feeding operation is started. The wire breaking postprocessing includes a wire tip cutting operation by the cutting electrodes 13 and 14 and a wire cutoff piece removing operation by the wire drawing unit 6, although details of these operations will be omitted.

According to this embodiment, at the time of the start of the wire connecting operation, the pipe arrangement 12 is in a suitably raised position as shown in Fig. 1, and the tip of wire 20 is supposed to be located above the electrode 14 with an appropriate clearance. The electrode 13 is in the opened condition, while the electrode 14 is set ready for detecting the arrival of the wire tip (i.e. the movable contact is connected to the contact T2 as in Fig. 5).

From this condition, the wire feeding operation is started according to the automatic wire feeding program. At the same time, the wire feeding trouble location detecting and recording operation is started. Hereinafter, contents of these operations will be explained schematically with reference to the flowchart of Fig. 9.

First, the wire feed control section 64 starts feeding the wire 20 forward. The wire passage detecting section 68 is situated in a sensing condition for periodically detecting whether the wire has reached the position of electrode 14, i.e. the position Po [00] (Step M2).

If the wire 20 reaches the position Po and is brought into contact with the electrode 14, the wire feeding operation is interrupted once (Step M3) to clear the count N of the encoder 11 (N=0) (Step M4). Once the reference position is determined for locating the wire feeding trouble location by measuring in this manner, the wire feeding operation is resumed (Step M5) and the electrode 40 is ready for detecting a wire deflection with the deflection detecting section 67 (Step M6).

In the beginning of the feeding of wire 20, the electrode 13 is kept closed to clamp the wire, so that the wire 20 is drawn out together with the pipe arrangement 12. When the leading edge of the pipe arrangement 12 reaches the positioning portion 71 of the upper guide 7, the feeding of the wire is once again interrupted. However, the electrode 13 is opened and the wire feeding operation is immediately resumed unless the wire deflection is detected (this step is omitted in the flowchart). The wire feeding operation is carried out while confirming that the wire 20 has not yet reached the end point of the wire feeding operation (Step M7). This confirmation is made by periodically reading the point pulse count N from the encoder 11 and comparing C × N (where C is a conversion factor identical to that applied at the time of detection of wire break) with the distance L11 between the reference point Po [00] and the point Po [11] set at the end point of wire feeding operation.

When the wire 20 reaches the-point Po [11] without getting stuck, it means that the wire feeding operation is successfully completed and, without undergoing procedure of steps succeeding the step M7.

If the tip of wire 20 gets stuck somewhere in the wire path, it means that the wire 20 was in contact with the deflection detecting electrode as shown in Fig. 3. Thus, the processing proceeds from step M6 to step M8.

More specifically, when the deflection of wire 20 is detected, feeding of the wire is discontinued in the step M8; value Nf at this moment is read from the encoder position pulse counter, and then the distance Lf from the reference position Po [00] is calculated by multiplying Nf by the conversion factor C (Step M9).

Next, section Qf corresponding to the distance Lf is identified (Step M10), and corresponding feeding trouble frequency Lf is increased by 1 (Step M11). For example, when the wire 20 gets stuck in the dies guide 73 located before the upper die 72 in the upper guide 7, it is judged that the feeding trouble has happened in the section Q03. Hence, the stored value B03 in the register address D1013 which counts and stores corresponding wire feeding trouble frequency is incremented by 1.

When the processing for calculating and storing the feeding trouble location is finished, a wire feeding retrial is carried out to continue the feeding of the wire 20 (Step M12). More specifically, the wire 20 is wound up once by an appropriate amount, and then fed forward by an appropriate amount. During this retrial, whether the retrial is successful or not is determined by checking if the wire 20 is in contact with the wire deflection detecting electrode 40 (Step M13). When the first retrial fails the processing returns to the step M12 to restart the retrial.

The number of times of retrials is limited to an appropriate number (e.g. 3 times). When the number of times of retrial exceeds the limit, it is concluded that continuation of the wire feeding is impossible (Step M14), to discontinue processing at once, and measures such as removing the causes of failure are taken. In this case, if the program memory 52 (refer to Fig. 5) stores a program for reading out an address number corresponding to the stored value which has been renewed latest, it is possible to identify a section of the latest feeding trouble.

When the retrial succeeds within the limited number of times, the processing returns to the step M5 and continues the feeding of the wire 20 and the detection of deflection (Step M6). If the wire gets stuck again somewhere else, the processings of the steps M8-M14 are repeated. Then, the similar processings are repeated, and the tip of wire passes through the feeding section (i.e. the region where the take-up roller 16 and the pinch roller 17 are disposed) until finally reaching the position Po [11] being set at the end point (refer to Fig. 1), unless the retrial number of times exceeding the limit is recorded. In step M7, YES judgement is made for the first time to complete the wire feeding operation accompanying the feeding trouble location detecting and storing operation (termination of processing).

It will be needless to explain that various settings in the above-described embodiment, such as designation of the detecting sections and determination of the reference position, do not limit the scope of the present invention. For example, it can be allowed to partly or wholly differentiate the settings of detecting sections between the break trouble detection and the feeding trouble detection.

By setting the dividing points Po [00], Po [01] ---at intermediate points within the sections most likely to have troubles, the probability of occurrence of error in the section data is considered to be reduced even if there are measuring errors more or less in detecting trouble locations.

Regarding the reference point for the measurement of feeding trouble locations, for example, it will be a reasonable choice to set the reference point to the tip position of the wire under the condition that the pipe arrangement 12 is positioned at the positioning portion 71 of the upper guide 7 (In this condition, the wire tip position corresponds to the inlet of the upper guide).

Furthermore, the electrode 14 for detecting wire passage (or wire arrival in the wire feeding operation) or the deflection detecting electrode 40 need not be limited in their positions or functions to the features disclosed in this embodiment.

As described in the foregoing, according to the present embodiment, the wire feeding trouble, typically caused by the advance of wire tip being obstructed during wire feeding operation, is detected by deflection of the wire, and the location of such wire feeding trouble is detected by the length of the wire measured from the wire tip at the reference point to the point at which the wire feeding trouble is detected. For this end, the wire deflection detecting electrode is disposed at an appropriate position along the wire path. The fed amount of the wire passing through the vicinity of this deflection detecting electrode is detected as the amount of rotation of the wire feed roller drive motor or its integral rotary shaft or the like, based on which the wire trouble location is determined. Such amount of rotation can be measured easily by using a conventional encoder.

For example, a count value of a counter which counts output pulses outputted from an encoder, obtained at the time of detection of a wire feeding trouble (wire deflection), can give a wire trouble occurrence location in the form of a distance from a reference point, in the case where the count value is set to zero when the wire is at the reference point. The relationship between the count value and the distance (i.e. conversion factor) is obtainable beforehand by calibration or calculation.

A plurality of detecting sections are set in advance along the wire path corresponding to the distance from the reference position or the count value of output pulses from the encoder, so that it can be judged which of these sections includes the detected wire feeding trouble location, and the result of the judgment is stored as individual sectional data. By accumulating the wire feeding trouble data in individual sections, it becomes possible to read out these data when necessary and utilize them as data for determining the content of maintenance work for the wire cut electric discharge machine. Furthermore, it is possible to utilize them as data for inquiring into the causes of wire feeding trouble, or considering preventive measures.

According to the present embodiment, the technical means used for the wire feeding trouble detection and storage is commonly used for executing the wire break position detection and storage. That is, the wire feeding trouble location is measured as the amount of wire fed from the time the wire is in the reference position to the time the deflection of the wire is detected, while the wire break location is detected as the amount of wire wound from the time the wire is broken to the time the wire just passes the predetermined point (i.e. the position corresponding to the wire passage detecting electrode). Since feeding and winding of wire differ only in the direction of movement of the wire, it is obvious that the encoder and the counter to be used for wire feeding can also be used for wire winding.

For example, in the case where the count value of the counter means is reset to 0 at the time the wire is broken, wire break trouble location can be known as a distance information measured from the wire passage detecting electrode (i.e. a predetermined point) on the basis of the count value at the time the wire passed the wire passage detecting electrode. The relationship between the count value and the distance (i.e. conversion factor) can be applied to the same data as that to be used for detecting the position of wire feeding trouble.

A plurality of detecting sections are set in advance along the wire path in relation to the distance from the reference position or the wire passage detecting electrode position or the corresponding count value of output pulses from the encoder, taking account of both the wire feeding trouble and the wire break trouble. It is judged as to which of these sections includes the detected wire feeding trouble location or the detected wire breaking trouble, the sections being commonly applicable to both troubles. The judgement result is stored as individual section data. By accessing the accumulated individual section data relating to the wire feeding or break trouble, it is clearly understood how often the wire feeding trouble and the break trouble have occurred in each section.

## Claims

1. A wire trouble location detecting method for a wire cut electric discharge machine, the method comprising monitoring continually whether a wire (20) is deflected by being prevented from advancing further when the leading edge of the wire (20) gets stuck;
characterised by:
detecting a wire feed amount when the wire is fed forward along a wire path by a wire feeding means (4), said wire feed amount being detected as information relating to a distance which a leading edge of the wire (20) has advanced from a wire feed reference position (14) determined on said wire path;
identifying a section (Q) under which wire feeding trouble location falls, out of plural sections into which the wire path is divided, when deflection of the wire (20) is detected, based on said wire feed amount detected at the time the deflection of the wire (20) is detected, said designated section (Q) being discriminated from among a plurality of sections (Q) provided along the wire path, and
accumulatively storing each occurrence of wire feeding trouble in a wire feeding trouble storing region corresponding to said designated section (Q), in a storing means (53).

2. A wire trouble location detecting method for a wire cut electric discharge machine, the method comprising steps of:
detecting a distance travelled by a wire (20) from the time a wire winding-up operation is started to the time a broken end of the wire (20) just passes a winding-up completion position (14) determined on a wire path, in a process of winding up the wire (20) along the wire path by rotating a supply roller (9) in response to interruption of a wire feeding operation due to break of the wire (20), and
identifying as a wire break trouble location a point separate from said winding-up completion point (14) in the wire feeding direction along the wire path by said detected distance travelled by the wire (20), said wire feeding trouble location being given by identifying a specific section (Q) under which it falls, from among plural sections (Q) into which the wire path has been divided;
characterised by a further step of updating data in a wire break trouble storing region of a storing means (53) each time a wire break trouble occurs, said wire break trouble storing region corresponding to said specific section (Q).

3. A wire trouble location detecting apparatus for a wire cut electric discharge machine, the apparatus comprising a wire deflection detecting means (40) for detecting whether a wire (20) is deflected by being prevented from advancing further along a wire path when the leading edge of the wire (20) gets stuck;
characterised by:
a feed-start-position passage detecting means (14) for detecting whether a leading edge of the wire (20), fed forward along the wire path, passes a wire-feed-start position determined on the wire path;
a wire travel amount detecting means (11) designed to be reset in response to a detection signal from said feed-start-position passage detecting means (14) and to output information relating to the travel amount of the wire (20);
a wire feeding trouble location identifying means (51) for identifying the location of wire feeding trouble based on said wire travel amount read from said wire travel amount detecting means (11) in response to the output signal from said wire deflection detecting means (40), said wire feeding trouble location identifying means (51) being operable to identify the output of said wire travel amount detecting means (11) in the form of a specific section (Q) designated from among plural sections (Q) into which the wire path is divided, and
a storing means (53) for accumulatively storing each wire feeding trouble occurring within one of said sections (Q) into a wire feeding trouble storing region thereof, said wire feeding trouble storing region corresponding to said section (Q).

4. A wire trouble location detecting apparatus for a wire cut electric discharge machine, the apparatus comprising:
a winding-up means (8,9) for winding up a wire (20) along a wire path in response to interruption of a wire feed operation due to detection of a break of the wire (20) by a wire break detecting means;
a wire winding-up amount detecting means (11) for detecting information relating to distance travelled by a wire (20) from the start of wire winding operation by said winding means (8,9) to the time the broken end of the wire (20) just passes a winding completion position (14) determined on the wire path; and
a wire break location identifying means (51) which converts the output of said wire winding-up amount detecting means (11) into a distance so that the wire break location is identified as the point to be reached by advancing the distance obtained by said conversion in the wire feeding direction along the wire path from said winding completion position (14), said break location identifying means (51) being operable to convert the output of said wire winding-up amount detecting means (11) into the corresponding distance, and to identify a section (Q) corresponding to said converted distance, from among a plurality of sections (Q) into which the wire path is divided;
characterised by:
a storing means (53) for accumulatively storing each wire feeding trouble occurring within one of said sections (Q) in a wire break trouble storing region thereof, said wire break trouble storing region corresponding to said section (Q).

5. A wire trouble location detecting apparatus for a wire cut electric discharge machine in accordance with claim 4, the apparatus further comprising:
a wire feed roll (4) driven by a wire feed motor (10) in both forward and backward directions, for feeding a wire (20) forward along the wire path or winding a broken wire backward;
a feed-start-position passage detecting means (14) provided at a start point side of said wire path for detecting whether a leading edge of said wire (20) passes a wire-feed-start position (14) determined on said wire path;
a wire feeding trouble detecting means (40);
an encoder providing said wire winding-up amount detecting means (11) for detecting a rotational amount of said wire feed motor (10);
a wire feeding trouble location takeout means designed to stop said wire feed motor (10) in response to a wire feeding trouble detected by said wire feeding trouble detecting means (40) and for reading out an output of said encoder (11);
a means for stopping the wire feed motor (10) in response to a break of wire detected by said wire break detecting means and resetting said encoder (11);
a means for sending a reset signal to said encoder (11) when said feed start position passage detecting means (14) detects that said leading edge of said wire (20) has passed said wire feed start position (14) during a wire feeding operation;
a wire break location detecting means operable to receive the output of said encoder (11) when said wire feed start position passage detecting means (14) detects that the broken end of the wire (20) has passed said wire feed start position (14) by reversely rotating said wire feeding roll (4);
a conversion-into-distance means for converting the output obtained from said wire feeding trouble location detecting means and said wire break location detecting means into distance values; and
the wire trouble location identifying means (51) being operable for identifying a wire feeding trouble location or a wire break location on the bases of said wire-feed-start position and said distance values obtained by said conversion-into-distance means.

6. The wire trouble location detecting apparatus for a wire cut electric discharge machine in accordance with claim 5, wherein said wire trouble location identifying means (51) is operable to provide information concerning a section (Q) corresponding to the position to be reached by advancing the distance obtained by said conversion-into-distance means from said wire feed start position (14), the section being one of a plurality of sections (Q) previously provided along the wire path.

7. The wire trouble location detecting apparatus for a wire cut electric discharge machine in accordance with claim 5 or 6, wherein the storing means (53) is operable to store the frequency of wire feeding troubles detected by said wire feeding trouble detecting means (40) and the frequency of wire break troubles detected by said wire break detecting means.

## Patentansprüche

1. Verfahren zum Feststellen des Orts einer Störung in der Drahtvorbewegung für eine elektrische Entladungsdrahtschneidemaschine, welches Verfahren ein ständiges Überwachen dahingehend umfaßt, ob ein Draht (20) dadurch, daß er an seinem weiteren Vorrücken gehindert wird, wenn sich der Vorderteil des Drahts (20) festläuft, durchgebogen wird,
**gekennzeichnet** durch
ein Erfassen eines Drahtvorbewegungsbetrags, wenn der Draht durch ein Drahtvorbewegungsmittel (4) längs eines Drahtwegs vorbewegt wird, wobei der Drahtvorbewegungsbetrag als Information erfaßt wird, die sich auf eine Distanz bezieht, um die ein Vorderteil des Drahts (20) von einer Drahtvorbewegungs-Bezugsposition (14) aus, die auf dem Drahtweg bestimmt ist, vorgerückt ist,
ein Ermitteln eines Abschnitts (Q), in den der Ort der Störung in der Drahtvorbewegung fällt, aus einer Mehrzahl von Abschnitten, in die der Drahtweg unterteilt ist, wenn eine Durchbiegung des Drahts (20) erfaßt ist, auf der Grundlage des Drahtvorbewegungsbetrags, der zum Zeitpunkt der Durchbiegung des Drahts (20) erfaßt ist, wobei der bezeichnete Abschnitt (Q) von einer Vielzahl von Abschnitten (Q), die längs des Drahtwegs vorgesehen sind, unterschieden wird, und
ein akkumulatives Speichern jedes Auftretens einer Störung in der Drahtvorbewegung in einen Drahtvorbewegungsstörungs-Speicherbereich, der dem bezeichneten Abschnitt (Q) entspricht, in einem Speichermittel (53).

2. Verfahren zum Feststellen des Orts einer Störung in der Drahtvorbewegung für eine elektrische Entladungsdrahtschneidemaschine, welches Verfahren Schritte umfaßt zum
Erfassen einer Distanz, die durch einen Draht (20) von dem Zeitpunkt an, zu dem ein Drahtaufwickelvorgang gestartet ist, bis zu dem Zeitpunkt, zu dem ein Bruchende des Drahts (20) gerade eine Aufwickelbeendigungsposition (14) durchläuft, die auf einem Drahtweg bestimmt ist, durchlaufen ist, bei einem Vorgang zum Aufwickeln des Drahts (20) des Drahtwegs durch Drehen einer Zuführungsrolle (9) in Reaktion auf eine Unterbrechung eines Drahtvorbewegungsvorgangs infolge eines Bruchs des Drahts (20), und
Ermitteln eines Punkts, welcher von der Aufwickelbeendigungsposition (14) in der Drahtvorbewegungsrichtung längs des Drahtwegs um die erfaßte Distanz, über die der Draht (20) bewegt ist, entfernt ist, als einen Drahtbruchstörungsort, wobei der Drahtvorbewegungsstörungsort durch Ermittlung eines bestimmten Abschnitts (Q), in den dieser fällt, aus einer Mehrheit von Abschnitten (Q), in die der Drahtweg unterteilt worden ist, gegeben ist,
**gekennzeichnet** durch einen weiteren Schritt zum Aktualisieren von Daten in einem Drahtbruchstörungs-Speicherbereich eines Speichermittels (53) jedesmal dann, wenn eine Drahtbruchstörung auftritt, wobei der Drahtbruchstörungs-Speicherbereich dem bestimmten Abschnitt (Q) entspricht.

3. Vorrichtung zum Feststellen des Orts einer Störung in der Drahtvorbewegung für eine elektrische Entladungsdrahtschneidemaschine, welche Vorrichtung ein Drahtdurchbiegungs-Erfassungsmittel (40) zum Erfassen einer Situation, in der ein Draht (20) dadurch, daß er an seinem weiteren Vorrücken längs eines Drahtwegs gehindert wird, wenn sich der Vorderteil des Drahts (20) festläuft, durchgebogen wird,
**gekennzeichnet** durch
ein Vorbewegungsstartpositionsdurchlauf-Erfassungsmittel (14) zum Erfassen, ob ein Vorderteil des Drahts (20), der längs des Drahtwegs vorbewegt wird, eine Drahtvorbewegungs-Startposition, die auf dem Drahtweg bestimmt ist, durchläuft,
ein Drahtbewegungsbetrags-Erfassungsmittel (11), das dafür vorgesehen ist, in Reaktion auf ein Erfassungssignal aus dem Vorbewegungsstartpositionsdurchlauf-Erfassungsmittel (14) und auf eine Ausgangssignalinformation, welche sich auf den Betrag der Bewegung des Drahts (20) bezieht, rückgesetzt zu werden,
ein Drahtvorbewegungsstörungsort-Ermittlungsmittel (51) zum Ermitteln des Orts der Drahtvorbewegungsstörung auf der Grundlage des Drahtbewegungsbetrag, welcher aus dem Drahtbewegungsbetrags-Erfassungsmittel (11) in Reaktion auf das Ausgangssignal aus dem Drahtdurchbiegungs-Erfassungsmittel (40) ausgelesen wird, wobei das Drahtvorbewegungsstörungsort-Ermittlungsmittel (51) betreibbar ist, um das Ausgangssignal des Drahtbewegungsbetrags-Erfassungsmittels (11) in Form eines bestimmten Abschnitts (Q) zu identifizieren, der aus einer Mehrheit von Abschnitten (Q), in die der Drahtweg unterteilt ist, bezeichnet ist, und
ein Speichermittel (53) zum akkumulativen Speichern jeder Drahtvorbewegungsstörung, die innerhalb eines der Abschnitts (Q) auftritt, in einem Drahtvorbewegungsstörungs-Speicherbereich desselben, wobei der Drahtvorbewegungsstörungs-Speicherbereich dem Abschnitt (Q) entspricht.

4. Vorrichtung zum Feststellen des Orts einer Störung in der Drahtvorbewegung für eine elektrische Entladungsdrahtschneidemaschine, welche Vorrichtung umfaßt:
ein Aufwickelmittel (8, 9) zum Aufwickeln eines Drahts (20) längs eines Drahtwegs in Reaktion auf eine Unterbrechung eines Drahtvorbewegungsvorgangs infolge der Erfassung eines Bruchs des Drahts (20) durch ein Drahtbruch-Erfassungsmittel,
ein Drahtaufwickelbetrags-Erfassungsmittel (11) zum Erfassen einer Information, die sich auf die Distanz bezieht, um die ein Draht (20) vom Start des Drahtwikkelvorgangs durch das Aufwickelmittel (8, 9) an bis zu dem Zeitpunkt bewegt ist, zu dem das Bruchende des Drahts (20) gerade eine Wickelbeendigungsposition (14), die auf dem Drahtweg bestimmt ist, durchläufen hat, und
ein Drahtbruchort-Ermittlungsmittel (51), welches das Ausgangssignal des Drahtaufwickelbetrags-Erfassungsmittels (11) in eine Distanz umsetzt, so daß der Drahtbruchort als der Punkt ermittelt wird, der durch Vorrükken in der Drahtvorbewegungsrichtung längs des Drahtwegs von der Wickelbeendigungsposition (14) an um die Distanz, die durch die Umsetzung gewonnen ist, zu erreichen ist, wobei das Drahtbruchort-Ermittlungsmittel (51) betreibbar ist, um das Ausgangssignal des Drahtaufwikkelbetrags-Erfassungsmittels (11) in die entsprechende Distanz umzusetzen und um einen Abschnitt (Q), welcher der umgesetzten Distanz entspricht, aus einer Vielzahl von Abschnitten (Q), in die der Drahtweg unterteilt ist, zu ermitteln,
**gekennzeichnet** durch
ein Speichermittel (53) zum akkumulativen Speichern jeder Drahtvorbewegungsstörung, die innerhalb eines der Abschnitte (Q) auftritt, in einem Drahtbruchstörungs-Speicherbereich desselben, wobei der Drahtbruchstörungs-Speicherbereich dem Abschnitt (Q) entspricht.

5. Vorrichtung zum Feststellen des Orts einer Störung in der Drahtvorbewegung für eine elektrische Entladungsdrahtschneidemaschine nach Anspruch 4, welche Vorrichtung ferner umfaßt:
eine Drahtvorbewegungsrolle (4), die mittels eines Drahtvorbewegungsmotors (10) sowohl in der Vorwärts- als auch in der Rückwärtsrichtung angetrieben wird, zum Vorbewegen eines Drahts (20) längs des Drahtwegs oder zum Aufwickeln eines gebrochenen Drahts in Rückwärtsrichtung,
ein Vorbewegungsstartpositionsdurchlauf-Erfassungsmittel (14), das auf einer Startpunktseite des Drahtwegs zum Erfassen vorgesehen ist, ob ein Vorderteil des Drahts (20) eine Drahtvorbewegungs-Startposition (14), die auf dem Drahtweg bestimmt ist, durchläuft,
ein Drahtvorbewegungsstörungs-Erfassungsmittel (40),
einen Codierer, der das Drahtaufwickelbetrags-Erfassungsmittel (11) zum Erfassen eines Drehungsbetrags des Drahtvorbewegungsmotors (10) bereitstellt,
ein Drahtvorbewegungsstörungsort-Herausnahmemittel, das dafür vorgesehen ist, den Drahtvorbewegungsmotor (10) in Reaktion auf eine Drahtvorbewegungsstörung, die durch das Drahtvorbewegungsstörungs-Erfassungsmittel (40) erfaßt ist, zu stoppen, und zum Auslesen eines Ausgangssignals des Codierers (11),
ein Mittel zum Stoppen des Drahtvorbewegungsmotors (10) in Reaktion auf einen Drahtbruch, der durch das Drahtbruch-Erfassungsmittel erfaßt ist, und Rücksetzen des Codierers (11),
ein Mittel zum Senden eines Rücksetzsignals an den Codierer (11), wenn das Vorbewegungsstartpositionsdurchlauf-Erfassungsmittel (14) erfaßt, daß der Vorderteil des Drahts (20) die Drahtvorbewegungs-Startposition (14) während eines Drahtvorbewegungsvorgangs durchlaufen hat,
ein Drahtbruchort-Erfassungsmittel, das betreibbar ist, um das Ausgangssignal des Codierers (11) zu empfangen, wenn das Drahtvorbewegungsstartpositionsdurchlauf-Erfassungsmittel (14) erfaßt, daß das Bruchende des Drahts (20) die Drahtvorbewegungs-Startposition (14) durch umgekehrte Drehung der Drahtvorbewegungsrolle (4) durchlaufen hat,
ein Mittel zum Umsetzen in die Distanz zum Umsetzen des Ausgangssignals, das von dem Drahtvorbewegungsstörungsort-Erfassungsmittel und dem Drahtbruchort-Erfassungsmittel gewonnen ist, in Distanzwerte, und
das Drahtbruchort-Ermittlungsmittel (51), das betreibbar ist, um einen Drahtvorbewegungsstörungsort oder einen Drahtbruchort auf den Grundlagen der Drahtvorbewegungs-Startposition und der Distanzwerte, die durch das Mittel zum Umsetzen in die Distanz gewonnen sind, zu ermitteln.

6. Vorrichtung zum Feststellen des Orts einer Störung in der Drahtvorbewegung für eine elektrische Entladungsdrahtschneidemaschine nach Anspruch 5, in der das Drahtbruchort-Ermittlungsmittel (51) betreibbar ist, um Information betreffend einen Abschnitt (Q) bereitzustellen, welcher der Position entspricht, die durch Vorrükken um die Distanz von der Drahtvorbewegungs-Startposition (14) zu ereichen ist, welche Distanz durch das Mittel zum Umsetzen in die Distanz gewonnen wird, wobei der Abschnitt einer aus einer Vielzahl von Abschnitten (Q) ist, die vorab längs des Drahtwegs geschaffen wurden.

7. Vorrichtung zum Feststellen des Orts einer Störung in der Drahtvorbewegung für eine elektrische Entladungsdrahtschneidemaschine nach Anspruch 5 oder 6, in der das Speichermittel (53) betreibbar ist, um die Häufigkeit von Drahtvorbewegungsstörungen, die durch das Drahtvorbewegungsstörungs-Erfassungsmittel (40) erfaßt werden, und die Häufigkeit von Drahtbruchstörungen, die durch das Drahtbruch-Erfassungsmittel erfaßt werden, zu speichern.

## Revendications

1. Procédé de détection d'une localisation d'un dysfonctionnement d'alimentation de fil pour une machine d'étincelage à découpe par fil, le procédé comprenant la surveillance en continu du fait de savoir si un fil (20) est soumis à une déviation provenant d'un empêchement à poursuivre son avance lorsque le bord avant du fil (20) se casse;
caractérisé par le fait de:
détecter une quantité d'alimentation de fil lorsque le fil est alimenté vers l'avant le long d'une voie qui lui est réservée par un moyen d'alimentation de fil (4), ladite quantité d'alimentation de fil étant détectée sous forme d'une information quant à la distance à laquelle un bord avant du fil (20) s'est avancé par rapport à une position de référence d'alimentation de fil (14) déterminée le long de ladite voie qui lui est réservée;
identifier une section (Q) dans laquelle rentre la localisation d'un dysfonctionnement d'alimentation de fil, parmi plusieurs sections correspondant à une subdivision de la voie qui lui est réservée, lorsqu'on détecte une déviation du fil (20) basée sur ladite quantité d'alimentation de fil détectée au moment où l'on détecte la déviation du fil (20), ladite section désignée (Q) étant discriminée parmi plusieurs sections (Q) prévues le long de la voie réservée au fil, et
stocker par accumulation chaque apparition d'un dysfonctionnement d'alimentation de fil dans une zone de stockage de dysfonctionnement d'alimentation de fil correspondant à ladite section désignée (Q), dans un moyen de mémoire (53).

2. Procédé de détection d'une localisation d'un dysfonctionnement d'alimentation de fil pour une machine d'étincelage à découpe par fil, le procédé comprenant les étapes consistant à:
détecter une distance parcourue par un fil (20) à partir du moment où une opération de bobinage de fil a été déclenchée jusqu'au moment où l'extrémité cassée du fil (20) passe juste par une position (14) de terminaison du bobinage déterminée le long d'une voie qui lui est réservée, dans un procédé de bobinage du fil (20) le long d'une voie réservée au fil en faisant tourner un rouleau d'alimentation (9) en réponse a l'interruption d'une opération d'alimentation de fil due à la cassure du fil (20), et
identifier sous forme d'une localisation d'un dysfonctionnement par cassure de fil, un point séparé dudit point (14) correspondant à la terminaison du bobinage dans la direction d'alimentation du fil le long de la voie qui lui est réservée, par ladite distance détectée parcourue par le fil (20), ladite localisation de dysfonctionnement d'alimentation de fil étant fournie en identifiant une section spécifique (Q) dans laquelle elle rentre, parmi plusieurs sections (Q) correspondant à la subdivision de la voie réservée au fil;
caractérisé par une étape supplémentaire consistant à mettre à jour des données dans une région de stockage d'un moyen de mémoire (53), mémorisant des dysfonctionnements dus à des cassures de fil, chaque fois qu'un dysfonctionnement par cassure de fil se produit, ladite région de stockage de dysfonctionnement par cassure de fil correspondant à ladite section spécifique (Q).

3. Appareil de détection d'une localisation d'un dysfonctionnement d'alimentation de fil pour une machine d'étincelage à découpe par fil, l'appareil comprenant un moyen de détection de déviation de fil (40) pour détecter le fait de savoir si un fil (20) est soumis à une déviation provenant d'un empêchement à poursuivre son avance le long d'une voie qui lui est réservée lorsque le bord avant du fil (20) se casse;
caractérisé par:
un moyen de détection (14) du passage par la position de départ d'alimentation pour détecter le fait de savoir si un bord avant du fil (20), alimenté vers l'avant le long de la voie qui lui est réservée, passe par une position de départ d'alimentation de fil déterminée le long de la voie qui lui est réservée;
un moyen de détection (11) de la distance parcourue par le fil, conçu pour être remis à zéro en réponse à un signal de détection provenant dudit moyen de détection (14) du passage par la position de départ d'alimentation et pour fournir des informations concernant la distance parcourue par le fil (20);
un moyen d'identification (51) d'une localisation d'un dysfonctionnement d'alimentation de fil pour identifier la localisation d'un dysfonctionnement d'alimentation de fil en se basant sur ladite distance parcourue par le fil, fournie par ledit moyen (11) de détection de la distance parcourue par le fil en réponse au signal de sortie provenant dudit moyen de détection de déviation de fil (40), ledit moyen d'identification (51) d'une localisation d'un dysfonctionnement d'alimentation de fil pouvant être mis en service pour identifier la sortie dudit moyen (11) de détection de la distance parcourue par le fil sous la forme d'une section spécifique (Q) désignée parmi plusieurs sections (Q) correspondant à une subdivision de la voie qui lui est réservée, et
un moyen de mémoire (53) pour stocker par accumulation chaque dysfonctionnement d'alimentation de fil qui apparaît dans une desdites sections (Q), dans une de ses régions stockant des dysfonctionnements d'alimentation de fil, ladite région de stockage de dysfonctionnement d'alimentation de fil correspondant à ladite section (Q).

4. Appareil de détection d'une localisation d'un dysfonctionnement d'alimentation de fil pour une machine d'étincelage à découpe par fil, l'appareil comprenant:
un moyen de bobinage (8, 9) pour bobiner un fil (20) le long d'une voie qui lui est réservée en réponse à une interruption d'une opération d'alimentation de fil, due à une cassure du fil (20), via un moyen de détection de cassure de fil;
un moyen de détection (11) de la quantité de bobinage du fil pour détecter des informations concernant la distance parcourue par un fil (20) à partir du début de l'opération de bobinage du fil par ledit moyen de bobinage (8, 9) jusqu'au moment où l'extrémité cassée du fil (20) passe juste par une position de terminaison de bobinage (14) déterminée le long de la voie qui lui est réservée; et
un moyen d'identification (51) d'une localisation d'une cassure de fil, qui transforme en une distance la sortie dudit moyen de détection (11) de la quantité de bobinage de fil, si bien que la localisation de la cassure du fil est identifiée comme étant le point à atteindre en parcourant la distance obtenue par ladite conversion dans la direction d'alimentation de fil le long de la voie qui lui est réservée à partir de ladite position de terminaison de bobinage (14), ledit moyen (51) d'identification d'une localisation d'une cassure pouvant être mis en service pour transformer la sortie dudit moyen (11) de détection de la quantité d'enroulement de fil en une distance correspondante, et pour identifier une section (Q) correspondant à ladite distance transformée, parmi plusieurs sections (Q) correspondant à la subdivision de la voie réservée au fil;
caractérisé par:
un moyen de mémoire (53) pour stocker par accumulation chaque dysfonctionnement d'alimentation de fil qui apparaît dans une desdites sections (Q), dans une de ses régions de stockage de dysfonctionnement par cassure de fil, ladite région de stockage de dysfonctionnement par cassure de fil correspondant à ladite section (Q).

5. Appareil de détection d'une localisation d'un dysfonctionnement d'alimentation de fil pour une machine d'étincelage à découpe par fil selon la revendication 4, l'appareil comprenant en outre:
un rouleau d'alimentation de fil (4) entraîné par un moteur d'alimentation de fil (10) à la fois vers l'avant et vers l'arrière, pour alimenter un fil (20) vers l'avant le long de la voie qui lui est réservée ou pour bobiner vers l'arrière un fil cassé;
un moyen de détection (14) du passage par la position de début d'alimentation prévu du côté du point de départ le long de ladite voie réservée au fil pour détecter le fait de savoir si un bord avant dudit fil (20) passe par une position (14) de début d'alimentation de fil déterminée le long de ladite voie qui lui est réservée;
un moyen de détection (40) de dysfonctionnement d'alimentation de fil;
un encodeur procurant ledit moyen de détection (11) de la quantité de bobinage de fil pour détecter une valeur en rotation dudit moteur d'alimentation de fil (10);
un moyen de prélèvement d'une localisation d'un dysfonctionnement d'alimentation de fil conçu pour arrêter ledit moteur d'alimentation de fil (10) en réponse à un dysfonctionnement d'alimentation de fil détecté par ledit moyen de détection (40) d'un dysfonctionnement d'alimentation de fil et pour générer une sortie dudit encodeur (11);
un moyen pour arrêter le moteur d'alimentation de fil (10) en réponse à une cassure de fil détectée par ledit moyen de détection de cassure de fil et pour remettre ledit encodeur (11) à zéro;
un moyen pour envoyer un signal de remise à zéro audit encodeur (11) lorsque ledit moyen de détection (14) du passage par la position de départ d'alimentation détecte le passage dudit bord avant dudit fil (20) par ladite position de début d'alimentation de fil (14) au cours d'une opération d'alimentation de fil;
un moyen de détection de la localisation d'une cassure de fil mis en service pour recevoir la sortie dudit encodeur (11) lorsque ledit moyen de détection (14) du passage par la position du début de l'alimentation de fil détecte le passage de l'extrémité cassée du fil (20) par ladite position de début d'alimentation de fil (14), en faisant tourner ledit rouleau d'alimentation de fil (4) dans le sens contraire;
un moyen de conversion en distance pour transformer la sortie obtenue dudit moyen de détection d'une localisation d'un dysfonctionnement d'alimentation de fil et dudit moyen de détection d'une localisation d'une cassure de fil en valeurs de distance; et
le moyen d'identification (51) de localisation d'un dysfonctionnement d'alimentation de fil pouvant être mis en service pour identifier une localisation d'un dysfonctionnement d'alimentation de fil ou une localisation de cassure de fil sur la base desdites valeurs de la position de début d'alimentation de fil et de ladite distance, obtenue par ledit moyen de conversion en distance.

6. Appareil de détection d'une localisation d'un dysfonctionnement d'alimentation de fil pour une machine d'étincelage à découpe par fil selon la revendication 5, dans lequel ledit moyen (51) d'identification d'une localisation d'un dysfonctionnement d'alimentation de fil est mis en service pour fournir des informations concernant une section (Q) correspondant à la position à atteindre en parcourant la distance obtenue par ledit moyen de conversion en distance depuis ladite position de début d'alimentation de fil (14), la section représentant une des sections (Q) prévues au préalable le long de la voie qui lui est réservée.

7. Appareil de détection d'une localisation d'un dysfonctionnement d'alimentation de fil pour une machine d'étincelage à découpe par fil selon la revendication 5 ou 6, dans lequel le moyen de mémoire (53) peut être mis en service pour stocker la fréquence de dysfonctionnement d'alimentation de fil détecté par ledit moyen de détection (40) de dysfonctionnement d'alimentation de fil, ainsi que la fréquence de dysfonctionnement de cassure de fil détecté par ledit moyen de détection de cassure de fil.
